# EUROPEAN PATENT SPECIFICATION

(11) **EP 3 515 875 B1**
(45) Date of publication and mention of the grant of the patent: **02.11.2022**
(21) Application number: 17787978.0
(22) Date of filing: 14.09.2017
(51) Int. Cl.: C04B 26/28, C04B 40/00, C04B 30/02, C04B 28/26, C04B 28/14, C04B 111/52

(54) **SILICATE COATING FOR IMPROVED ACOUSTICAL PANEL PERFORMANCE AND METHODS OF MAKING SAME**
SILIKATBESCHICHTUNG FÜR VERBESSERTE AKUSTISCHE PANEELLEISTUNG UND VERFAHREN ZUR HERSTELLUNG DAVON
REVÊTEMENT DE SILICATE POUR UNE MEILLEURE PERFORMANCE ACOUSTIQUE DE PANNEAUX ET PROCÉDÉS DE FABRICATION ASSOCIÉS

(30) Priority: 20.09.2016 US 201615271033
(43) Date of publication of application: 31.07.2019
(73) Proprietor: USG Interiors, LLC, Chicago, IL 60661-3676 (US)
(72) Inventor: DONELAN, Jeffrey W., Highland Park Illinois 60035 (US); ALDABAIBEH, Naser, Homer Glen Illinois 60491 (US)
(74) Representative: Findlay, Alice Rosemary
(86) International application number: PCT/US2017/051522
(87) International publication number: WO 2018/057390

(56) References cited:
- EP-A1- 2 481 859
- EP-A1- 2 762 522
- EP-A2- 1 321 595
- WO-A1-02/068359
- WO-A1-2008/098794
- WO-A1-2009/067300
- WO-A1-2013/080025
- DE-A1- 4 110 454
- DE-A1- 4 213 388
- DE-A1- 10 239 631
- DE-A1- 19 725 761
- DE-B1- 2 455 691
- DE-C1- 3 340 556
- DE-C2- 2 747 663
- DE-C2- 2 748 307
- DE-C2- 4 212 842
- US-A- 3 246 063
- US-A- 3 490 065
- US-A- 3 498 404
- US-A1- 2009 155 603
- US-A1- 2009 173 464

## Description

### FIELD OF THE INVENTION

The disclosure relates generally to a curable coating for acoustical panels, acoustical panels coated with the curable coating of the disclosure, and methods of making same. More particularly, the disclosure relates to a curable coating composition which is not claimed, including an inorganic silicate binder and an inorganic filler wherein the curable coating composition is free of an organic polymeric binder.

### BACKGROUND

Acoustical panels (or tiles) are specially designed systems that are intended to improve acoustics by absorbing sound and/or reducing sound transmission in an indoor space, such as a room, hallway, conference hall, or the like. Although there are numerous types of acoustical panels, a common variety of acoustical panel is generally composed of mineral wool fibers, fillers, colorants and a binder, as disclosed, for example, in U.S. Pat. No. 1,769,519. These materials, in addition to a variety of others, can be employed to provide acoustical panels with desirable acoustical properties and other properties, such as color and appearance.

In order to prepare panels, fibers, fillers, bulking agents, binders, water, surfactants and other additives are typically combined to form a slurry and processed. Cellulosic fibers are typically in the form of recycled newsprint. The bulking agent is typically expanded perlite. Fillers may include clay, calcium carbonate or calcium sulfate. Binders may include starch, latex and reconstituted paper products linked together to create a binding system that facilitates locking all ingredients into a desired structural matrix.

Organic binders, such as starch, are often the primary binder component providing structural adhesion for the panel. Starch is a preferred organic binder because, among other reasons, it is relatively inexpensive. For example, panels containing newsprint, mineral wool and perlite can be bound together economically with the aid of starch. Starch imparts both strength and durability to the panel structure, but is susceptible to problems caused by moisture. Moisture can cause the panel to soften and sag, which is unsightly in a ceiling and can lead to the weakening of the panel.

One method used to counter problems caused by moisture in panels is to coat the back the panels with a melamine-formaldehyde resin based coating with or without a ureaformaldehyde component. When such a formaldehyde resin based coating is exposed to moisture or humidity, it tends to resist the compressive forces on the back surface that result from the downward sagging movement.

Cured melamine-formaldehyde resins have a rigid and brittle crosslinked structure when properly cured. This rigid structure acts to resist the compressive forces on the back surface that result from the downward sagging movement. However, formaldehyde resins tend to emit formaldehyde, which is a known environmental irritant.

To decrease formaldehyde emissions, formaldehyde reactive materials, such as urea, have been added to scavenge the free formaldehyde. Unfortunately, such small molecule scavengers can end cap the reactive groups of the formaldehyde resin, and thereby prevent significant levels of cross-linking from occurring. As a result, the desired highly cross-linked polymer structure is never formed. The resulting coating is weak and will not act to resist sag.

Although there are a variety of commercially available acoustical panel products classified as low volatile organic chemical (VOC) emitters, these products nonetheless emit detectable levels of formaldehyde due to the presence of various formaldehyde emitting components that are employed in these panels. Although formaldehyde emissions that are generated during heat exposure in the manufacturing process may be exhausted into stacks or thermal oxidizers, the resulting product will still contain residual formaldehyde, which can be emitted post-installation. A reduction in formaldehyde emissions, or elimination of such emissions, will provide improved indoor air quality in those locations where acoustical panels are installed, such as public buildings including schools, healthcare facilities, or office buildings.

WO2013/080025A1 discloses a building composite panel adapted to be supported by a fixed structure and manufactured entirely by a cold operation, comprising an inner core of mineralized wood fibers, a first coating formed by a first fluid composition comprising a solution of crude clay in water, adapted to impregnate said mineralized wood fibers and naturally dried, and a second outer coating formed by a second thick composition comprising a mixture of binders and clay in water and again undergoing a natural drying operation.

DE4213388A1 discloses_sound- or heat-insulating constructional products, e.g. plates, dishes, mouldings, comprising rock wool sealed under pressure, e.g. basalt rock wool made of yarns of fibres drawn from a rockmelt, and bound using binders.

DE2455691B discloses a heat-insulating mineral fibre panel which is coated with a composition comprising by weight: 60-85% of water-glass, 4-16% of one or more mineral silicates of sheet-like structure (e.g. talc, or a clay mineral such as kaolin), 1-5% of at least one oxide or carbonate of an alkaline earth metal or zinc, and/or an oxide or hydroxide of aluminium and/or barium sulphate, and optionally 1-5% of pigment, in water to 100%, at a thickness of 500- 800 g/ m² , and the coating is then dried.

WO2009/067300A1 discloses a process including forming a dilute slurry mixture including water, mineral wool, a thermoplastic binder and/or starch; and distributing the dilute slurry on a porous carrier to have the slurry dewatered to a base mat by gravity drainage to remove water by gravity. A vacuum is adjusted to gradually apply vacuum to the gravity dewatered base mat to further dewater the base mat without subjecting the mat to static pressure that would compress the base mat. The base mat is dried to form an acoustical ceiling product.

US2009/173464A1 discloses a composition and process suitable for making acoustic tiles. In some examples, the compositions comprise: perlite; inorganic material selected from the group consisting of calcium sulfate, calcium carbonate, clay and mixtures thereof; a binder selected from the group consisting of starch, a combination of starch and cellulosic fibers, latex, kraft paper gel and mixtures thereof; optionally mineral wool; optionally gypsum; and cellulosic fiber, wherein at least a portion of the cellulosic fiber and at least a portion of the inorganic material are pulp and paper processing waste comprising cellulosic fiber, clay and calcium carbonate.

US3,498,404A discloses a fire-resistant acoustic tile comprises a metal facing sheet adhered by acrylic adhesive to a porous backing board and perforations being provided through the sheet and board. The metal sheet may be steel foil and the backing board may comprise mineral wool with starch binder, gel binder and perlite.

US3,246,063A discloses a method of making acoustical tile normally utilized in ceiling constructions, with an impervious backing.

### SUMMARY

The invention is defined by independent product claim 1 and independent method claim 6. Dependent claims 2-5 and 7-13 define additional optional features of the claimed coated fibrous panel and method of coating a fibrous pane Disclosed, but not claimed, is a curable coating composition including 10-50 vol.% inorganic binder, based on the total volume of solids in the dry coating composition, and 50-90 vol.% inorganic filler, based on the total volume of solids in the dry coating composition, wherein the inorganic binder comprises an alkali metal silicate or an alkaline earth metal silicate, the inorganic binder and the inorganic filler are not the same, and the coating is substantially free of an organic polymeric binder.

Another aspect of the disclosure provides a coated ceiling tile including a ceiling tile having a backing side and an opposing facing side, a cured coating layer disposed on the backing side of the panel, the cured coating layer including 10-50 vol.% inorganic binder, based on the total volume of the dry coating, and 50-90 vol.% inorganic filler, based on the total volume of the dry coating, wherein the inorganic binder comprises an alkali metal silicate or an alkaline earth metal silicate, wherein the inorganic binder and the inorganic filler are not the same, and the coating is substantially free of an organic polymeric binder.

Another aspect of the disclosure provides a method of coating a ceiling tile including providing a ceiling tile having a backing side and an opposing facing side; depositing a layer on the backing side comprising an inorganic binder and an inorganic filler, wherein the inorganic binder is present in an amount between 10-50 vol.%, based on the total volume of solids in the layer, and the inorganic filler is present in an amount between 50-90 vol.%, based on the total volume of solids in the layer, wherein the inorganic binder comprises an alkali metal silicate or an alkaline earth metal silicate, the inorganic binder and the inorganic filler are not the same, and the inorganic binder and inorganic filler are substantially free of an organic polymeric binder; and heating the layer to a surface temperature of at least 177 °C (about 350°F), thereby forming a metal silicate coating on the backing side of the ceiling tile.

Further aspects and advantages will be apparent to those of ordinary skill in the art from a review of the following detailed description. While the methods and compositions are susceptible of embodiments in various forms, the description hereafter includes specific embodiments with the understanding that the disclosure is illustrative, and is not intended to limit the disclosure to the specific embodiments described herein.

### BRIEF DESCRIPTION OF THE DRAWINGS

**Fig. 1** schematically illustrates a perspective view of a coated panel having a back coating according to an embodiment of the disclosure.
**Fig. 2** is a graph of the effect of cure temperature and time on the sag performance of a coated panel having a back coating according to an embodiment of the disclosure.

### DETAILED DESCRIPTION

The disclosure provides a curable coating composition including 10-50 vol.% inorganic binder, based on the total volume of solids in the dry coating composition, and 50-90 vol.% inorganic filler, based on the total volume of solids in the dry coating composition, wherein the inorganic binder comprises an alkali metal silicate or an alkaline earth metal silicate, the inorganic binder and the inorganic filler are not the same, and the coating is substantially free of an organic polymeric binder.

Advantageously, coating compositions of the disclosure, when coated on an acoustical tile, provide acoustical tiles demonstrating reduced sag compared to uncoated ceiling tiles and can demonstrate at least similar, if not improved, sag resistance relative to finished ceiling tiles having the industry-standard formaldehyde coating. Further, coating compositions of the disclosure, when coated on an acoustical tile, provide acoustical tiles having a reduced risk of formaldehyde emissions even when compared with known formaldehyde-free coatings for acoustical panels. In particular, formaldehyde-free coatings for acoustical panels generally include organic polymeric binders. Certain organic polymeric binders inherently contain, release, emit or generate detectable and quantifiable levels of formaldehyde. Thus, even though formaldehyde may not be a component of an organic polymeric binder as used in acoustical panels, the panel may still release, emit or generate formaldehyde for a number of reasons, including, for example, degradation of organic polymeric binders. As the coating compositions of the disclosure are free of organic polymeric binders, the coating composition of the disclosure do not contain or release formaldehyde associated with the breakdown of such organic polymeric binders.

As used herein, the terms panel and tile should be considered interchangeable.

As used herein, "substantially free of an organic polymeric binder" means that the inorganic binder does not contain an organic polymeric binder and that the coating composition including the inorganic binder also does not contain significant amounts of purposefully added organic polymeric binder. Thus, incidental or background quantity of organic polymer binder (e.g., less than about 100 ppb) may be present in the coating compositions according to the disclosure (e.g., that leached out of the panel core material) and be within the scope of the disclosure. As used herein "organic polymeric binder" includes organic polymers and oligomers and further includes organic monomers that can polymerize in situ (with or without curing) to form an organic polymer.

The disclosure further provides a coated ceiling tile including a ceiling tile having a backing side and an opposing facing side, a cured coating layer disposed on or supported by the backing side of the panel, the cured coating layer including 10-50 vol.% inorganic binder, based on the total volume of the dry coating, and 50-90 vol.% inorganic filler, based on the total volume of the dry coating, wherein the inorganic binder is an alkali metal silicate or an alkaline earth metal silicate, wherein the inorganic binder and the inorganic filler are not the same, and the coating is substantially free of an organic polymeric binder. As used herein, "back coating" refers to a metal silicate coating provided on the backing side of the ceiling tile or fibrous panel.

The disclosure, according to the invention, further provides a coated fibrous panel, comprising mineral wool fiber and a starch, wherein the fibrous panel is a ceiling tile or an acoustical panel, the coated fibrous panel including a panel having a backing side and an opposing facing side, a cured coating layer disposed on the backing side of the panel, the cured coating layer including 10-50 vol.% inorganic binder, based on the total volume of the dry coating, and 50-90 vol.% inorganic filler, based on the total volume of the dry coating, wherein the inorganic binder is an alkali metal silicate or an alkaline earth metal silicate, wherein the inorganic binder and the inorganic filler are not the same, and the coating is substantially free of an organic polymeric binder.

Optionally, the coating according to the disclosure is substantially free of additional, non-alkali metal silicate binders. Further optionally, the coating according to the disclosure is substantially free of non-alkaline earth metal silicates. As used herein, "substantially free of additional non-alkali metal silicate binders" and "substantially free of additional non-alkaline metal silicate binders" means that the inorganic binder does not contain significant amounts of purposefully added non-alkali metal silicate binders or non-alkaline earth metal silicate binders. Thus, incidental or background quantity of non-alkali metal silicate binders or non-alkaline earth metal silicate binders (e.g., less than 3 volume percent, less than 2 vol.%, or less than 1 vol.%, based on the total solids content) may be present in the coating compositions according to the disclosure and be within the scope of the disclosure. Thus, in embodiments, the inorganic binder consists of or consists essentially of one or more alkali metal silicates, alkaline earth metal silicates, and combinations thereof. In embodiments, the metal silicate is selected from the group consisting of sodium silicate, potassium silicate, lithium silicate, magnesium silicate, calcium silicate, beryllium silicate, and combinations thereof. In embodiments, the alkali metal silicate comprises an alkali metal silicate selected from the group consisting of sodium silicate, potassium silicate, lithium silicate, and combinations thereof. In embodiments, the alkaline earth metal silicate comprises an alkaline earth metal silicate selected from the group consisting of magnesium silicate, calcium silicate, beryllium silicate, and combinations thereof. In embodiments, the inorganic filler comprises a filler selected from the group consisting of clay, optionally kaolin clay or bentonite, mica, sand, barium sulfate, silica, talc, gypsum, calcium carbonate, wollastonite, zinc oxide, zinc sulfate, hollow beads, bentonite salts, and combinations thereof. In embodiments, the binder comprises sodium silicate and the filler comprises at least one of kaolin clay and calcium carbonate.

In embodiments, the binder is substantially formaldehyde free. As used herein, "substantially formaldehyde free" means that the binder is not made with formaldehyde or formaldehyde-generating chemicals and will not release formaldehyde in normal service conditions. Desirably, the coating composition comprising the formaldehyde free binder is also substantially formaldehyde free. The term "substantially formaldehyde free" is defined as meaning free of intentionally added formaldehyde and that an incidental or background quantity of formaldehyde (e.g., less than 100 ppb) may be present in the coating composition and be within the scope of the disclosure. Certain additives such as wet-state preservatives or biocides included in surface treatments and backcoatings can release, emit or generate detectable and quantifiable levels of formaldehyde. Thus, even though formaldehyde may not be a purposefully added component used in acoustical panels, the panel may still release, emit or generate formaldehyde for a number of reasons, including, for example, degradation of biocides.

The quantity of formaldehyde present in the coating composition can be determined according to ASTM D5197 by heating dried coating samples to 115° C in a humidified Markes Microchamber and then collecting the emissions under controlled conditions using a 2,4-dinitrophenylhydrazine (DNPH) cartridge. Following exposure, the DNPH cartridge is washed with acetonitrile, the acetonitrile wash is diluted to a 5 ml volume, and the sample is analyzed by liquid chromatography. Results are reported in µg/mg of coating sample and compared to a control sample. Samples that are within experimental error of the control sample over a significant series of tests are clearly substantially formaldehyde free.

Optionally, the coating composition and/or coating layer of the disclosure further includes a dispersant.

The disclosure further provides a method of coating a ceiling tile including providing a ceiling tile having a backing side and an opposing facing side; depositing a layer on the backing side comprising an inorganic binder and an inorganic filler, wherein the inorganic binder is present in an amount between 10-50 vol.%, based on the total volume of solids in the layer, and the inorganic filler is present in an amount between 50-90 vol.%, based on the total volume of solids in the layer, wherein the inorganic binder comprises an alkali metal silicate, the inorganic binder and the inorganic filler are not the same, and the inorganic binder and inorganic filler are substantially free of an organic polymeric binder; and heating the layer to a surface temperature of at least 177°C (350°F), thereby forming a metal silicate coating on the backing side of the ceiling tile.

The disclosure further provides, according to the invention, a method of coating a fibrous panel including providing a fibrous panel comprising a panel core comprising a mineral wool fiber and a starch, wherein the fibrous panel is a ceiling tile or an acoustical panel, the fibrous panel having a backing side and an opposing facing side; depositing a layer on the backing side of the fibrous panel comprising an inorganic binder and an inorganic filler, wherein the inorganic binder is present in an amount between 10-50 vol.%, based on the total volume of solids in the dry layer, and the inorganic filler is present in an amount between 50-90 vol.%, based on the total volume of solids in the dry layer, wherein the inorganic binder comprises an alkali metal silicate solution or an alkaline earth metal silicate solution, the inorganic binder and the inorganic filler are not the same, and the inorganic binder and inorganic filler are substantially free of an organic polymeric binder; and heating the layer to a surface temperature of at least 177°C (350°F) thereby forming a metal silicate coating on the backing side of the fibrous panel.

Optionally, the inorganic binder and inorganic filler are premixed to form a curable coating composition. Thus, in embodiments the inorganic binder and inorganic filler are deposited concurrently. In embodiments, the premixed curable coating composition further includes a dispersant. In alternative embodiments, the inorganic binder and inorganic filler are deposited step-wise. For example, the inorganic filler may be deposited first and the inorganic binder may be deposited second. Optionally, a dispersant may be deposited with the inorganic filler and/or inorganic binder. As used herein, "a layer" is deposited on the backside of the ceiling tile whether deposition is conducted using a premixed curable coating composition or step-wise deposition of the inorganic binder and the inorganic filler. Similarly, as used herein, "a layer" is deposited on at least one side of a fibrous panel whether deposition is conducted using a premixed curable coating composition or step-wise deposition of the inorganic binder and the inorganic filler.

Optionally, the method further includes conducting chemical curing in addition to or, in some instances, in lieu of, the heating step. In embodiments, chemical curing involves coating the metal silicate coating layer with a solution of a multivalent metal or acid, optionally after heating but prior to cooling the coating. The solution of multivalent metal or acid may then be dried. In embodiments, chemical curing involves providing a multivalent metal or acid in combination with the inorganic filler and depositing the multivalent metal and inorganic filler concurrently. In embodiments, the multivalent metal comprises a bivalent metal salt, a trivalent metal salt, or combinations thereof.

### INORGANIC BINDER

In general, the inorganic binder comprises curable metal silicate compounds that link together to create a binding system that facilitates the retention of all ingredients into a desired structural matrix. The inorganic binder comprises one or more alkali metal silicates, alkaline earth metal silicates, and combinations thereof. Alkali metal and alkaline earth metal silicates advantageously form networks of silicates composed of corner-shaped SiO₄ tetrahedra through crosslinking and/or dehydration.

Alkali metal and/or alkaline earth metal silicates, typically provided as aqueous solutions/dispersions, have physical and chemical properties that are useful in coating applications. When applied as a thin coating, the silicate solution/dispersion dries to form a film having one or more of the following advantages: low cost, non-flammable, resistant to temperatures up to 3000°F, odorless, and non-toxic. Suitable metal silicates include sodium silicate, potassium silicate, lithium silicate, magnesium silicate, calcium silicate, beryllium silicate and combinations thereof. In embodiments, the metal silicate is an alkali metal silicate. In embodiments, the metal silicate is an alkaline earth metal silicate. In embodiments the metal silicate is selected from the group consisting of sodium silicate, potassium silicate, lithium silicate, magnesium silicate, calcium silicate, beryllium silicate, and combinations thereof. In embodiments, the alkaline earth metal silicate is selected from the group consisting of magnesium silicate, calcium silicate, beryllium silicate, and combinations thereof. In embodiments the alkali metal silicate is selected from sodium silicate, potassium silicate, and combinations thereof. In embodiments, the alkali metal silicate is sodium silicate. Sodium silicate solutions may also be referred to as "waterglass" and have a nominal formula Na₂O(SiO₂)ₓ. Commercially available sodium silicate solutions have a weight ratio of SiO₂:Na₂O in the range of about 1.5 to about 3.5. The ratio represents an average of various molecular weight silicate species. Suitable sodium silicate solutions have a weight ratio of SiO₂:Na₂O in the range of about 1.5 to about 3.5, about 2 to about 3.2, about 2.5 to about 3.2, for example, about 2.5, about 2.6, about 2.7, about 2.8, about 2.9, about 3.0, about 3.1, or about 3.2. In embodiments, the sodium silicate solution may have a weight ratio of SiO₂:Na₂O in the range of about 3.0 to about 3.2. Without intending to be bound by theory, it is believed that the lower alkali content provides a silicate having less affinity for water and can, therefore, dry more quickly.

Metal silicate solutions are converted to solid metal silicate coatings by two methods, the evaporation of water (dehydration) or chemical setting. The two mechanisms can be used separately or in combination. Films of metal silicates are subject to moisture pick-up and degradation. However, this process can be slowed if water is completely removed from the silicate. Air drying alone usually is not adequate to provide metal silicate coatings that can be exposed to weather or high moisture conditions. For such applications, heat may be needed. The temperature should increase gradually to 93°C to 99°C (200-210°F ) to slowly remove excess water, then final curing can be done at 176°C to 371°C (350-700°F). Heating too quickly may cause steam to form, resulting in blistering or puffing of the film. To provide relatively insoluble films, alkali metal silicate solutions can be reacted with a variety of multivalent metal compounds to form cured alkali metal silicate coatings by precipitation of insoluble metal silicate compounds from solution to provide the solid layer, as described in detail below. Chemical setting reactions may occur rapidly, and multivalent metal compounds can be applied concurrently with the inorganic binder, the inorganic filler, or as an after-treatment such that the multivalent metal compound is deposited over a layer comprising the inorganic binder.

In embodiments, the curable coating composition is substantially free of binders other than the metal silicate. As used herein, "substantially free of binders other than the metal silicate" means that the inorganic binder does not contain significant amounts of purposefully added non-alkali metal silicate binders or non-alkaline earth metal silicate binders. Thus, incidental or background quantity of non-alkali metal silicate binders or non-alkaline earth metal silicate binders (e.g., less than 3 volume percent, less than 2 vol.%, or less than 1 vol.%, based on the total solids content) may be present in the coating compositions according to the disclosure and be within the scope of the disclosure. Thus, in embodiments, the binder of the curable coating composition consists of or consists essentially of alkali metal silicates, alkaline earth metal silicates, and combinations thereof. In embodiments, the curable coating composition and the inorganic binder are substantially free of organic polymeric binders and substantially free of formaldehyde-containing binders.

### INORGANIC FILLER

Suitable mineral fillers include, for example, clay (e.g., kaolin clay and bentonite), mica, sand, barium sulfate, silica, talc, gypsum, calcium carbonate, wollastonite, zinc oxide, zinc sulfate, hollow beads, bentonite salts, and mixtures thereof. In embodiments, the filler is selected from the group consisting of clay, mica, sand, barium sulfate, silica, talc, gypsum, calcium carbonate, wollastonite, zinc oxide, zinc sulfate, hollow beads, bentonite salts and combinations thereof. In embodiments, the filler comprises calcium carbonate. In embodiments, the filler comprises a combination of calcium carbonate and kaolin clay.

The inorganic filler is not the same as the inorganic binder. Thus, in embodiments the inorganic filler is substantially free of alkali metal silicates and alkaline earth metal silicates. As used herein "substantially free of alkali metal silicates" and "substantially free of alkaline earth metal silicates" means that the inorganic filler does not contain significant amounts of purposely added alkali metal silicates, for example, sodium silicate, potassium silicate, or lithium silicate, or a significant amount of purposely added alkaline earth metal silicates, for example, magnesium silicate, calcium silicate, or beryllium silicate. Thus, incidental or background metal silicates (e.g., less than 3 vol.%, less than 2 vol.%, or less than 1 vol.%) may be present in the inorganic filler and be within the scope of the disclosure. Inorganic fillers comprising glass and clays may include aluminum silicate and be within the scope of the disclosure.

The coating composition and coating layer optionally further include one or more components selected from the group consisting of dispersants, pigments, surfactants, pH modifiers, buffering agents, viscosity modifiers, stabilizers, defoamers, flow modifiers, and combinations thereof.

Suitable dispersants include, for example, tetrapotassium pyrophosphate (TKPP) (FMC Corp.), sodium polycarboxylates such as Tamol^{®} 731A (Rohm & Haas) and nonionic surfactants such as Triton^{™} CF-10 alkyl aryl polyether (Dow Chemicals). Preferably the coating composition comprises a dispersant selected from nonionic surfactants such as Triton^{™} CF-10 alkyl aryl polyether (Dow Chemicals).

Optionally, the coating composition and coating layer may further include minor amounts of a component to impart increased water resistance to the coating. For example, a component to impart increased water resistance can be included in the coating composition and/or coating layer in an amount of about 3 wt.% or less, about 2 wt.% or less, or about 1 wt.% or less. Suitable components that impart increased water resistance include, for example, siloxanes that impart hydrophobicity to the coating. Suitable siloxanes include, but are not limited to, polymethylhydrosiloxane, polydimethylsiloxane, and combinations thereof.

The curable coating composition may be prepared by admixing the inorganic binder, inorganic filler and other optional components using conventional mixing techniques. Typically, the coating particles or solids are suspended in an aqueous carrier. Typically, the inorganic binder and inorganic filler are added to and mixed with the aqueous carrier, followed by the other optional components in descending order according to the dry wt. % amount. Alternatively, the coating layer may be prepared by depositing the inorganic binder and inorganic filler step-wise. In such embodiments, the inorganic binder is added and mixed with an aqueous carrier, followed by the other optional components as described above, to form a binder dispersion which is typically first deposited and then the inorganic filler is added and mixed with an aqueous carrier, followed by the other optional components as described above, to form a filler dispersion which is typically subsequently deposited.

The solid content of the coating composition of the disclosure, the binder dispersion and/or the filler dispersion can be as high as practical for a particular application. For example, a limiting factor regarding the choice and amount of liquid carrier used is the viscosity obtained with the required amount of solids. Thus, spraying is the most sensitive to viscosity, but other methods are less sensitive. The effective range for the solid content of the coating composition is about 15% or more, e.g., about 20 wt. % or more, or about 25 wt. % or more, or about 30 wt. % or more, or about 35 wt. % or more, or about 40 wt. % or more, or about 45 wt. % or more. Alternatively, or in addition, the solid content of the coating composition is about 80 wt. % or less, or about 75 wt. % or less, or about 70 wt.% or less. Thus, the solid content of the coating composition can be bounded by any two of the above endpoints recited for the solid content of the coating composition. For example, the solid content of the coating composition can be from about 15 wt. % to about 80 wt. %, from about 35 wt. % to about 80 wt. %, from about 45 wt. % to about 75 wt. %, or from about 45 wt.% to about 70 wt.%.

In embodiments wherein the binder and filler are pre-mixed to form a curable coating composition and in embodiments wherein the binder dispersion and filler dispersion are prepared and deposited separately, the inorganic binder is provided in an amount in the range of about 10 to about 50 vol.%, based on the total volume of the solids in the coating composition and/or cured coating layer, and the inorganic filler is provided in an amount in the range of about 50 to about 90 vol.%, based on the total volume of the solids in the coating composition and/or the cured coating layer. For example, the inorganic binder can be provided in an amount in the range of about 10 to about 50 vol.%, about 15 to about 45 vol.%, or about 20 to about 30 vol.%, for example about 10 vol.%, about 15 vol.%, about 20 vol.%, about 25 vol.%, about 30 vol.%, about 35 vol.%, about 40 vol.%, about 45 vol.%, or about 50 vol.%. Similarly, the inorganic filler may be provided in an amount in the range of about, for example, about 50 to about 90 vol.%, about 55 to about 85 vol.%, or about 60 to about 80 vol.%, for example, about 50 vol.%, about 55 vol.%, about 60 vol.%, about 65 vol.%, about 70 vol.%, about 75 vol.%, about 80 vol.%, about 85 vol.%, or about 90 vol.%.

For example, a coating composition including 33.5 wt.% of a 37.5% solids sodium silicate solution, 31.4 wt.% additional water, 17.6 wt.% kaolin clay and 17.6 wt.% calcium carbonate has a solids content of about 47.8 wt.% made up of about 12.6% sodium silicate binder and about 35.2% inorganic filler (kaolin clay and calcium carbonate). Thus, of the solids, the sodium silicate binder makes up about 26.4 wt.% and the inorganic filler makes up about 73.6 wt.%. Because the density of cured silicate is similar to kaolin clay and calcium carbonate (about 2.7 g/cc), the corresponding volume percent of the sodium silicate binder and inorganic filler in the composition and final coating is roughly the same as the weight percent distribution in the solution, i.e., about 26.4 vol.% silicate binder and about 73.6 vol.% inorganic filler. Thus, for compositions comprising sodium silicate, most clays, and/or calcium carbonate, the wt.% of the solids in the composition roughly corresponds to the vol.% in the coating composition (due to the similar densities) and final silicate coating. However, as the skilled artisan will readily recognize, if a filler having a much higher density or lower density (e.g., hollow spheres) than the metal silicate binder is used, the wt.% of the solids in the composition will not be the same as the vol.% in the metal silicate coating compositions and silicate coatings according to the disclosure.

### FIBROUS PANEL

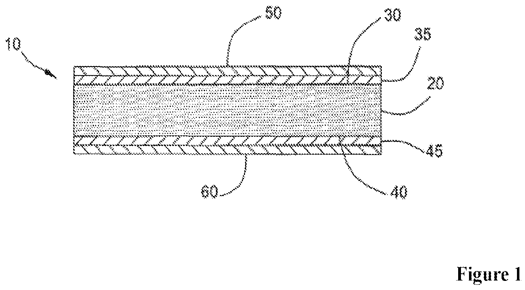

The disclosure is further directed to a panel (e.g., an acoustical panel, ceiling tile) coated with the coating composition of the disclosure. A coated panel **10** in accordance with one aspect of the present disclosure, as illustrated schematically in FIG. 1, comprises a panel core **20** having a backing side **30** and a facing side **40.** The panel optionally further comprises a backing layer **35** in contact with the backing side **30**, and/or a facing layer **45** in contact with the facing side **40.** A back coating layer **50** is disposed on, for example, in contact with the backing side **30** or optional backing layer **35.** Optionally, a further front coating layer **60** is disposed on, for example, with the facing side **40** or optional facing layer **45.**

The back coating layer **50** beneficially counteracts the sagging force of gravity in humid conditions, thus the coating is applied to the backing side **30** (or backing layer **35** if present) of the panel core **20.** The backing side **30** may be the side that is directed to the plenum above the panel in a suspended ceiling tile system. The coated panel **10** may be an acoustical panel for attenuating sound. The backing side **30** may be the side that is directed to a wall behind the panel in applications where an acoustical panel is provided on walls.

An illustrative procedure for producing the panel core **20** is described in U.S. Pat. No. 1,769,519. In one aspect, the panel core **20** comprises a mineral wool fiber and a starch. In another aspect of the present disclosure, the starch component can be a starch gel, which acts as a binder for the mineral wool fiber, as is disclosed in U.S. Pat. Nos. 1,769,519, 3,246,063, and 3,307,651. In a further aspect of the present disclosure, the panel core **20** can comprise a glass fiber panel.

The panel core **20** of the coated panel of the disclosure can also include a variety of other additives and agents. For example, the panel core **20** can include a calcium sulfate material (such as, stucco, gypsum and/or anhydrite), boric acid and sodium hexametaphosphate (SHMP). Kaolin clay and guar gum may be substituted for stucco and boric acid when manufacturing acoustical tile.

The core of the coated panel of the present disclosure can be prepared using a variety of techniques. In one embodiment, the panel core **20** is prepared by a wet- or water-felted process, as is described in U.S. Pat. Nos. 4,911,788 and 6,919,132. In another embodiment, panel core **20** is prepared by combining and mixing starch and a variety of additives in water to provide a slurry. The slurry is heated to cook the starch and create the starch gel, which is then mixed with mineral wool fiber. This combination of gel, additives, and mineral wool fiber (referred to as "pulp") is metered into trays in a continuous process. The bottom of the trays into which the pulp is metered can optionally contain a backing layer **35** (for example, a bleached paper, unbleached paper, or kraft paper-backed aluminum foil, hereinafter referred to as kraft/aluminum foil), which serves to aid in the release of the material from the tray, but also remains as part of the finished product. The surface of the pulp can be patterned, and the trays containing the pulp can be subsequently dried, for example, by transporting them through a convection tunnel dryer. Next, the dried product or slab can be fed into a finishing line, where it may be cut to size to provide the panel core **20.** The panel core **20** can then be converted to the panel of the present disclosure by application of the coating composition of the disclosure. The coating composition is preferably applied to the panel core **20** after the core has been formed and dried. In yet another embodiment, panel core **20** is prepared according to the method described in U.S. Pat. No. 7,364,015. Specifically, the panel core **20** comprises an acoustical layer comprising an interlocking matrix of set gypsum, which can be a monolithic layer or can be a multi-layer composite. Desirably panel core **20** is prepared on a conventional gypsum wallboard manufacturing line, wherein a ribbon of acoustical panel precursor is formed by casting a mixture of water, calcined gypsum, foaming agent, and optionally cellulosic fiber (e.g., paper fiber), lightweight aggregate (e.g., expanded polystyrene), binder (e.g., starch, latex), and/or enhancing material (e.g., sodium trimetaphosphate) on a conveyor belt.

In embodiments, the panel core comprises a backing sheet (e.g., paper, metallic foil, or combination thereof), optionally coated with scrim layer (e.g., paper, woven or nonwoven fiberglass) and/or densified layer precursor comprising calcined gypsum and having a density of at least about 561 kg/m³ (35 lbs/ft³). In yet another embodiment, panel core **20** is prepared according to the wet-felting process. In the wet-felting process, an aqueous slurry of the panel-forming materials including mineral wool, expanded perlite, starch and minor additives, are deposited onto a moving wire screen, such as a Fourdrinier or cylinder former. On the wire screen of a Fourdrinier, a wet mat is formed by dewatering the aqueous slurry by gravity and then optionally by vacuum suction. The wet mat is pressed to a desired thickness between press rolls for additional dewatering. The pressed mat is dried in ovens and then cut to produce acoustical panels. The panel core **20** can then be converted to the panel of the present disclosure by application of the coating composition of the disclosure. The coating composition is preferably applied to the panel core **20** after the core has been formed and dried.

In a further embodiment, the panel core **20** can include, as a preservative, one or more formaldehyde-free biocides, as described in U.S. Patent Application Publication 2007/0277948 A1. Suitable formaldehyde-free biocides include 1,2-benzisothiazolin-3-one, available as Proxel^{®} GXL or Proxel^{®} CRL (ARCH Chemicals), Nalcon^{®} (Nalco), Canguard^{™} BIT (Dow Chemical), and Rocima^{™} BT 1S (Rohm & Haas). Other isothiazolin-3-ones include blends of 1,2-benzisothiazolin-3-one and 2-methyl-4-isothiazolin-3-one, available as Acticide^{®} MBS (Acti-Chem). Additional isothiazolin-3-ones include 5-chloro-2-methyl-4-isothiazolin-3-one, 2-methyl-4-isothiazoline-3-one, and blends thereof. Blends of 5-chloro-2-methyl-4-isothiazolin-3-one and 2-methyl-4-isothiazoline-3-one are available as Kathon^{™} LX (Rohm & Haas), Mergal^{®} K14 (Troy Chemical), and Amerstat^{®} 251 (Drew Chemical). Another suitable formaldehyde-free biocide includes zinc 1-hydroxy-2(1H)-pyridinethione, available as Zinc Omadine^{®} (ARCH Chemicals), and is preferably effective in both the dry state and the wet state. Zinc 1-hydroxy-2(1H)-pyridinethione can also be employed with zinc oxide, available as Zinc Omadine^{®} emulsion. Other suitable formaldehyde-free biocides include 2-n-octyl-4-isothiazolin-3-one, available as Kathon^{™} 893 and Skane^{®} M-8 (Rohm & Haas), and 2-(4-thiazolyl)-benzimidazole, available as Metasol^{®} TK-100 (LanXess).

As previously discussed, the coated panel in accordance with the present disclosure can optionally include the backing layer **35.** Numerous materials can be employed as the backing layer **35**, including unbleached paper, bleached paper, kraft/aluminum foil, and the like. A flame resistant back coating optionally can be applied in combination with bleached or unbleached paper backing to improve the products surface burning characteristics. The flame resistant back coating can include a variety of components, such as, for example, water, a flame retardant, and a biocide. The backing layer **35** may also be employed for improving sag resistance and/or sound control. In addition, a fill coating or a plurality of fill coatings may also be applied to the backing layer **35.** The fill coating can include a variety of components, such as, for example, water, fillers, binders, and various other additives, such as defoamers, biocides, and dispersants. Generally, when a fill coating is used, the fill coating typically is applied after the metal silicate coating of the disclosure.

The coating composition of the present disclosure is suitable for use in coating a front and/or back side of a panel such as a fibrous panel (e.g., an acoustical panel or ceiling tile). The coating composition of the disclosure can be used with acoustical panels known in the art and prepared by methods known in the art, including acoustical panels prepared by a water-felting method. Suitable commercial ceiling tiles for use in accordance with the present disclosure include, for example, Radar^{™} brand ceiling tiles available from USG Interiors, Inc. of Chicago, Ill. The Radar^{™} brand tile is a water-felted slag wool or mineral wool fiber panel having a 1.6 cm (5/8") thickness and the following composition: 1-75 wt.% slag wool fiber, 5-75 wt.% expanded perlite, 1-25 wt.% cellulose, 5-15 wt.% starch, 0-15 wt.% kaolin, 0-80 wt.% calcium sulfate dehydrate, less than 2 wt.% limestone or dolomite, less than 5 wt.% crystalline silica, and less than 2 wt.% vinyl acetate polymer or ethylene vinyl acetate polymer. The diameters of the mineral wool fibers vary over a substantial range, e.g., 0.25 to 20 microns, and most of the fibers are in the range of 3 to 4 microns in diameter. The lengths of the mineral fibers range from about 1 mm to about 8mm. For example, acoustical panels and the preparation thereof are described in, for example, U.S. Pat. Nos. 1,769,519, 3,246,063, 3,307,651, 4,911,788, 6,443,258, 6,919,132, and 7,364,015.

### METHODS

The disclosure further provides a method of coating a ceiling tile including providing a ceiling tile having a backing side and an opposing facing side; depositing a layer on the backing side comprising an inorganic binder and an inorganic filler, wherein the inorganic binder is present in an amount between 10-50 vol.%, based on the total volume of solids in the layer, and the inorganic filler is present in an amount between 50-90 vol.%, based on the total volume of solids in the layer, wherein the inorganic binder comprises an alkali metal silicate or an alkaline earth metal silicate, the inorganic binder and the inorganic filler are not the same, and the inorganic binder and inorganic filler are substantially free of an organic polymeric binder; and heating the layer to a surface temperature of at least 177°C (350°F), thereby forming a metal silicate coating on the backing side of the ceiling tile.

The disclosure, according to the invention, further provides a method of coating a fibrous panel including providing a fibrous panel comprising a panel core comprising a mineral wool fiber and a starch, wherein the fibrous panel is a ceiling tile or an acoustical panel, the fibrous panel having a backing side and an opposing facing side, and depositing on the backing side a layer on the backing side comprising an inorganic binder and an inorganic filler, wherein the inorganic binder is present in an amount between 10-50 vol.%, based on the total volume of solids in the layer, and the inorganic filler is present in an amount between 50-90 vol.%, based on the total volume of solids in the layer, wherein the inorganic binder comprises an alkali metal silicate solution or an alkaline earth metal silicate solution, the inorganic binder and the inorganic filler are not the same, and the inorganic binder and inorganic filler are substantially free of an organic polymeric binder; and heating the layer to a surface temperature of at least 177°C (350°F), thereby forming a metal silicate coating on the backing side of the fibrous panel.

In embodiments, the inorganic binder and inorganic filler are pre-mixed to form a curable coating composition and, therefore, deposited concurrently in a mixture. In alternative embodiments, the inorganic filler and inorganic binder are deposited step-wise from an inorganic binder dispersion and an inorganic filler dispersion. Optionally, the inorganic filler is deposited first and the inorganic binder is deposited subsequently and in contact with the first, inorganic filler layer. Without intending to be bound by theory, it is believed that depositing the inorganic filler first enhances retention of the filler in the matrix formed by crosslinking/dehydration of the silicate binder and, further, facilitates crosslinking/dehydration of the silicate binder. In embodiments, a dispersant may be mixed into the curable coating composition and deposited concurrently with the inorganic binder and inorganic filler. A dispersant may also be included in the inorganic binder dispersion and/or inorganic filler dispersion when the binder and filler are deposited step-wise.

The coating composition can be applied to one or more surfaces of a panel, preferably a fibrous acoustical panel or ceiling tile substrate, using a variety of techniques readily known to and available to those skilled in the art. Such techniques include, for example, airless spraying systems, air assisted spraying systems, and the like. The coating may be applied by such methods as roll coating, flow coating, flood coating, spraying, curtain coating, extrusion, knife coating and combinations thereof. The metal silicate coating may be applied to have a coat weight in an amount on wet basis of from about 108 g/m² (10 g/ft²) to about 431 g/m² (40 g/ft²), from about 162 g/m² (15 g/ft²) to about 377 g/m² (35 g/ft²), and from 162 g/m² (15 g/ft²) to about 269 g/m² (25 g/ft²). The coating composition may have any suitable solids content, for example, in a range of about 30% to about 70%, about 40% to about 70%, about 40% to about 50%, or about 60% to about 70%. The metal silicate coating may be applied from a 65% solids composition to have a coat weight on a dry basis of about 68 g/m² (0.014 lb/ft² (about 6.5 g/ft²)) to about 317 g/m² (0.065 lb/ft² (about 29.3 g/ft²)), about 98 g/m² (0.020 lb/ft² (about 9.8 g/ft²)) to about 244 g/m² (0.050 lb/ft² (about 22.8 g/ft²)), or about 98 g/m² (0.020 lb/ft² (about 9.8 g/ft²)) to about 176 g/m² (0.036 lb/ft² (about 16.3 g/ft²)). In embodiments, the metal silicate coating may be applied from a 45 wt% solids composition to have a coat weight on a dry basis of about 49 g/m² (0.010 lb/ft² (about 4.5 g/ft²)) to about 195 g/m² (0.040 lb/ft² (about 18 g/ft²)), about 73 g/m² (0.015 lb/ft² (about 6.8 g/ft²)) to about 171 g/m² (0.035 lb/ft² (about 15.8 g/ft²)), or about 73 g/m² (0.015 lb/ft² (about 6.8 g/ft²) to about 122 g/m² (0.025 lb/ft² (about 11.3 g/ft²)). In an embodiment, the coating composition of the disclosure is applied to the backing side **30** of the panel. In another embodiment, the coating composition of the disclosure is applied to the backing layer **35** of the panel.

After the curable coating composition of the disclosure has been applied to the panel either as a premixed curable composition or step-wise deposition of the inorganic filler and inorganic binder, it is heated to effect drying and curing to form a crosslinked/dehydrated solid metal silicate coating layer. Without intending to be bound by theory, heating is believed to effect curing and crosslinking/dehydration of the inorganic silicate binder thereby enhancing retention of the inorganic filler within the desired structural matrix. Drying the resulting product removes any water used as a carrier for the coating composition or any of the components thereof and converts the inorganic silicate polymer binder into a structural, rigid network capable of providing enhanced structural rigidity to the panel. By "curing" is meant herein a chemical or morphological change that is sufficient to alter the properties of the binder, such as, for example, via covalent chemical reaction (e.g., condensation reaction), hydrogen bonding, and the like.

The duration, and temperature of heating, will affect the rate of drying, ease of processing or handling, and property development of the heated substrate. Heat treatment at from about 100° C to about 300° C (e.g., about 150° C to about 300° C, or about 175° C to about 250° C, or about 200°C to about 250°C) for a period of from about 3 seconds to about 15 minutes can be carried out. For acoustical panels, suitable temperatures are in a range of from about 175° C to about 280° C, or about 190°C to about 240°C (about 374 to about 464 °F). Generally, a coating surface temperature of about 200 to 240 ° C (about 392 to about 464 °F) is indicative of a full cure.

The drying and curing functions can be effected in two or more distinct steps, if desired. For example, the curable coating composition can be first heated at a temperature, and for a time, sufficient to substantially dry, but not to substantially cure the composition, and then heated for a second time, at a higher temperature, and/or for a longer period of time, to effect full curing. Such a procedure, referred to as "B-staging," can be used to provide coated panels in accordance with the disclosure.

Optionally, the methods of the disclosure can utilize chemical curing in addition to or even in lieu of heat curing. Chemical curing may include depositing a multivalent metal compound or an acidic solution to form cured metal silicate coatings by precipitation of insoluble metal silicate compounds from solution to provide a solid layer. In embodiments, after heating is conducted, for example, to dry and cure the metal silicate coating layer of the disclosure, the metal silicate coating layer may be further coated with a solution of a multivalent metal or acid prior to cooling. In embodiments wherein the inorganic binder and inorganic filler are deposited step-wise, the multivalent metal may be provided with the inorganic filler and/or the inorganic binder and deposited concurrently therewith.

Without intending to be bound by theory, it is believed that the multivalent metal displaces any monovalent cations (e.g., sodium, lithium, or potassium) in the interstitial spaces of the inorganic network accelerating curing and forming an insoluble silicate coating. The multivalent metal may be provided as a bivalent and/or trivalent metal salt. Suitable multivalent metals include, but are not limited to, Be²⁺, Mg²⁺, Ca²⁺, Sr²⁺, Ba²⁺, Zn²⁺, Cu²⁺, Fe²⁺, Fe³⁺, and Al³⁺. In embodiments, the multivalent metal includes a metal salt having a bivalent or trivalent cation selected from the group consisting of beryllium, magnesium, calcium, strontium, barium, zinc, copper, iron, aluminum, and combinations thereof. In embodiments, the multivalent metal includes a metal salt having a bivalent or trivalent cation selected from the group consisting of calcium, magnesium, zinc, copper, iron, aluminum, and combinations thereof. In embodiments, the multivalent metal includes an alkaline earth metal salt having a cation selected from the group consisting of beryllium, magnesium, calcium, strontium, barium, and combinations thereof. Suitable salts include chlorides, carbonates, sulfates, and combinations thereof. In embodiments, the multivalent metal is provided in the form of an oxide, hydroxide or combinations thereof. Without intending to be bound by theory, it is believed that slower dissolving compounds, for example carbonate salts, oxides, hydroxides, and the like may be use to provide stable formulations.

The multivalent metal compound can be applied by any technique known in the art, for example, airless spraying systems, air assisted spraying systems, and the like. The multivalent metal compound coating may be applied by such methods as roll coating, flow coating, flood coating, spraying, curtain coating, extrusion, knife coating and combinations thereof. Solutions of multivalent metal compounds, including but not limited to calcium chloride, magnesium chloride, and combinations thereof, can be sprayed onto a hot panel coated with the curable coating composition. Without intending to be bound by theory, it is believed that there is a minimum amount of multivalent metal salt required to drive the chemical curing reaction to completion. Suitable coat weights of multivalent metal salts for driving the chemical curing reaction to completion are at least about 27 mmol/m² (2.5 mmol/ft²), or at least about 54 mmol/m² (5 mmol/ft²) on a wet or dry basis. The multivalent metal may be deposited as a salt, at a coat weight (on a dry or wet basis) in the range of about 27 mmol/m² (2.5 mmol/ft²) to about 377 mmol/m² (35 mmol//ft²), or about 54 mmol/m² (5 mmol/ft²) to about 323 mmol/m² (30 mmol/ft²), from about 75 mmol/m² (7 mmol/ft²) to about 215 mmol/m² (20 mmol/ft²), or from about 97 mmol/m² (9 mmol/ft²) to about 162 mmol/m² (15 mmol/ft²).

Optionally, after the solution of a multivalent metal compound is sprayed onto the panel, the panel can be dried and heated again, for example, to a temperature in a range of 38°C to 204°C (100 °F to 400 °F) for 20 seconds to five minutes.

In embodiments wherein an acid is used for chemical curing, the acid may be any acid, for example an organic acid or a mineral acid including but not limited to organic acids and mineral acids selected from the group consisting of acetic acid, sulphuric acid, phosphoric acid, and combinations thereof.

The coated panel of the disclosure has increased resistance to permanent deformation (sag resistance), as determined according to ASTM C367M-09.

### SAG TEST - ASTM C367M-09

Sag of the ceiling tiles can be measured according to ASTM C367M-09. Briefly, ceiling tiles are placed in a testing rack that mimics a ceiling grid. The vertical position of the geometric center of the panel as set in the rack is measured to determine the initial position of the product following a 1 hour conditioning of 21°C (70°F )/50% R.H. Once the initial position of the tile the panel is measured, the tile is exposed to a variety of environmental conditions that comprise a single test cycle. In particular, in the examples described below, a cycle of 12 hours at 40°C (104°F)/50% R.H. followed by 12 hours at 21°C (70°F )/50% R.H. is completed 3 times, with the center position being measured after the completion of each cycle. The sag is reported in two ways. The "Total Movement" is determined by taking the vertical position difference between the initial position of the ceiling tile and the final position of the tile after the three cycles are completed. The "Final Position" is determined by taking the final vertical position of the tile. Unless specified otherwise, sag is listed in units of inches for 61 cm × 122 cm (2' × 4' tiles). Suitable tiles of the disclosure demonstrate less sag than uncoated tiles, for example, a sag of less than about 2.54 cm (1.0 inch), or less than about 2.03 cm (0.8 inches), or less than about 1.52 cm (0.6 inches), or less than about 1.27 cm (0.5 inches), or less than about 1.02 cm (0.4 inches), or less than about 0.75 cm (0.3 inches), or less than about 0.51 cm (0.2 inches), or less than about 0.25 cm (0.1 inches).

The forgoing description is given for clearness of understanding only, and no unnecessary limitations should be understood therefrom, as modifications within the scope of the invention which is defined in the claims, may be apparent to those having ordinary skill in the art.

The panels and methods in accordance with the disclosure can be better understood in light of the following examples, which are merely intended to illustrate the panels and methods of the disclosure and are not meant to limit the scope thereof in any way.

### EXAMPLES

### Example 1

A series of coated acoustical ceiling tiles were produced and tested for sag resistance. Unless specified otherwise, all ceiling tiles used in the Examples are Radar^{™} brand ceiling tiles available from USG Interiors, Inc. of Chicago, Ill. The Radar^{™} brand tile is a water-felted slag wool or mineral wool fiber panel having a 1.59 cm (5/8") thickness and the following composition: 1-75 wt.% slag wool fiber, 5-75 wt.% expanded perlite, 1-25 wt.% cellulose, 5-15 wt.% starch, 0-15 wt.% kaolin, 0-80 wt.% calcium sulfate dehydrate, less than 2 wt.% limestone or dolomite, less than 5 wt.% crystalline silica, and less than 2 wt.% vinyl acetate polymer or ethylene vinyl acetate polymer. The diameters of the mineral wool fibers vary over a substantial range, e.g., 0.25 to 20 microns, and most of the fibers are in the range of 3 to 4 microns in diameter. The lengths of the mineral fibers range from about 1 mm to about 8mm.

Samples were prepared using a coating composition comprising a formaldehyde free binder composition of the disclosure comprising sodium silicate solution (N Sodium Silicate Solution, 3.22 SiO₂:Na₂O, 37.5% solids, PQ Corporation, Valley Forge, PA in combination with an inorganic filler. The silicate coating composition included 33.5 wt.% sodium silicate solution, 31.4 wt.% water, 17.6 wt.% kaolin clay and 17.6 wt.% calcium carbonate. The silicate coating composition had a density of 1.42 g/cm³ (11.86 lb/gal), a viscosity at 5 rpm of 4,000 cP, a viscosity at 100 rpm of 280 cP, and 52 wt.% solids at 120°C. The viscosity was measured on a Brookfield viscometer having a #3 HB spindle. Individual sample panels were roll coated to provide 122 cm × 122 cm (4' × 4') sample panels with a front primer coat and a silicate back coating. The tiles were not punched or fissured and no finish top coatings were applied.

Three control samples, (1) a fully finished ceiling tile that was punched and fissured and having the melamine formaldehyde back coating, a front primer coating, and finish top coatings, (2) an unfinished ceiling tile with only the melamine formaldehyde back coating and front primer coating, and (3) an uncoated ceiling tile were used for comparison

A first set of ceiling tile samples were coated with the silicate coating composition of the disclosure were run through a high velocity air impingement convection oven with air temperature of 316°C (600°F) one time. The total oven time of 25 seconds provided a surface temperature of 177°C (350°F) shortly after the oven using a handheld infrared thermometer (Silicate #1). A second set of samples were produced identically to the first set of samples, but the ceiling tiles were run through the same oven three times achieving a backside temperature of 232°C (450°F) and a total oven time of 75 seconds (Silicate #2). Sag testing was conducted as described above.

| Peak Cure Temperature | 177 °C (350 °F) | 232 °C (450 °F) | 177 °C (350 °F) | 177°C (350 °F) |
|---|---|---|---|---|
| Wet Coating Weight (g/m² (g/ft²)) | 226 (21) (front) | 226 (21) (front) | 226 (21) (front) | 226 (21) (front) |
| | 248 (23) (back) | 248 (23) (back) | 129 (12) (back) | 129 (12) (back) |
| Curing Description/Time | Convection 25 seconds | Convection 3x 75 seconds (total) | Convection 25 seconds | Convection 25 seconds |
| Sample Description | Silicate #1 | Silicate #2 | Formaldehyde back coating | Finished tile |

| Sample | | 1 ^{st} Cycle Total Movement (cm (inches)) | 2^{nd} Cycle Total Movement (cm (inches)) | 3^{rd} Cycle Total Movement (cm (inches)) |
|---|---|---|---|---|
| Silicate #1 | Tile 1 | 2.4306 | 2.5654 | 2.6200 |
| | | (0.9215) | (1.0100) | (1.0315) |
| | Tile 2 | 2.3965 | 1.0230 | 2.6746 |
| | | (0.9435) | (2.5984) | (1.0530) |
| | Tile 3 | 2.3317 | 2.5298 | 2.6263 |
| | | (0.9180) | (0.9960) | (1.0340) |
| | **Average** | **2.3564** | **2.5646** | **2.6403** |
| | | **(0.9277)** | **(1.0097)** | **(1.0395)** |
| Silicate #2 | Tile 1 | 0.6795 | 0.9487 | 1.0236 |
| | | (0.2675) | (0.3735) | (0.4030) |
| | Tile 2 | 1.1278 | 1.3792 | 1.4554 |
| | | (0.4440) | (0.5430) | (0.5730) |
| | Tile 3 | 0.9931 | 1.2852 | 1.3627 |
| | | (0.3910) | (0.5060) | (0.5365) |
| | **Average** | **0.9335** | **1.2045** | **1.2807** |
| | | **(0.3675)** | **(0.4742)** | **(0.5042)** |
| Formaldehyde Back Coating | Tile 1 | 0.5474 | 0.7163 | 0.8090 |
| | | (0.2155) | (0.2820) | (0.3185) |
| | Tile 2 | 0.9411 | 1.1367 | 1.2433 |
| | | (0.3705) | (0.4475) | (0.4895) |
| | Tile 3 | 0.6985 | 0.8776 | 0.9766 |
| | | (0.2750) | (0.3455) | (0.3845) |
| | **Average** | **0.7290** | **0.9101** | **1.0097** |
| | | **(0.2870)** | **(0.3583)** | **(0.3975)** |
| Finished Tile | Tile 1 | 0.4385 | 1.3424 | 1.4389 |
| | | | (0.5285) | (0.5665) |
| | Tile 2 | 1.1138 | 1.4173 | 1.5329 |
| | | (0.4815) | (0.5580) | (0.6035) |
| | Tile 3 | 0.7569 | 0.9462 | 1.0439 |
| | | (0.2980) | (0.3725) | (0.4110) |
| | **Average** | **1.0312** | **1.2352** | **1.3386** |
| | | **(0.4060)** | **(0.4863)** | **(0.5270)** |
| Uncoated Board | Tile 1 | 2.7838 | 3.0810 | 3.2080 |
| | | (1.0960) | (1.2130) | (1.2630) |
| | Tile 2 | 2.9045 | 3.2080 | 3.3490 |
| | | (1.1435) | (1.2630) | (1.3185) |
| | Tile 3 | 3.0061 | 3.3528 | 3.4608 |
| | | (1.1835) | (1.3200) | (1.3625) |
| | **Average** | **2.8981 (1.141)** | **3.2139** | **3.3393** |
| | | | **(1.2653)** | **(1.3147)** |

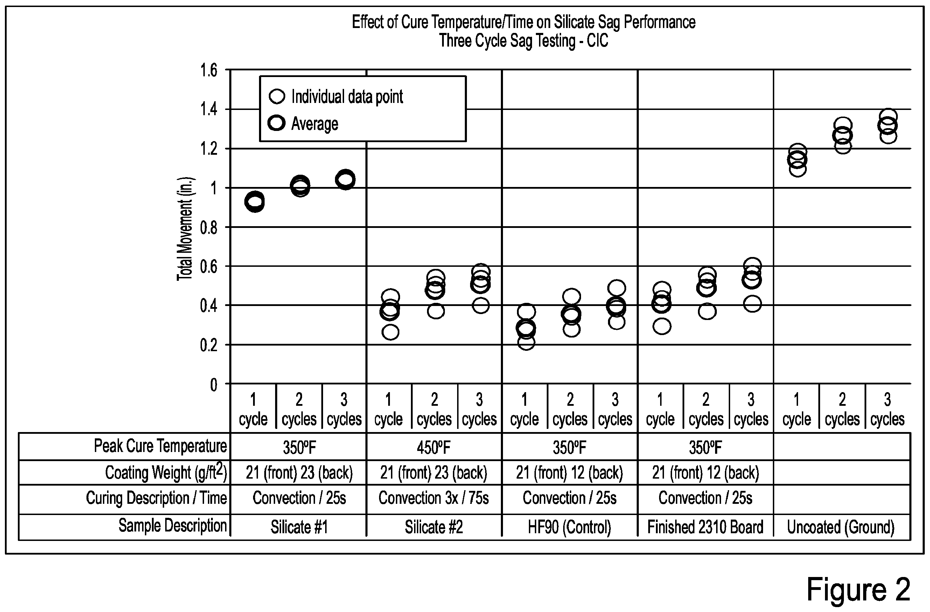

As shown in the above table and graphically depicted in figure 2, all coated ceiling tiles according to the disclosure had reduced sag compared to the uncoated ceiling tiles. Further, when the silicate coating was cured at a higher temperature (Silicate #2), the ceiling tile coated with the silicate based coating composition of the disclosure shows a performance similar to the finished ceiling tile with formaldehyde coating and the ceiling tile with only the formaldehyde coating. Thus, Example 1 demonstrates that ceiling tiles coated with curable coating compositions of the disclosure demonstrate performance at least comparable to the industry standard of formaldehyde coated ceiling tiles.

### Example 2

A series of coated acoustical ceiling tiles were produced and tested for sag resistance. Samples were prepared using a coating composition of the disclosure comprising a formaldehyde free binder composition comprising sodium silicate solution in combination with an inorganic filler. The silicate coating composition included 45.7 wt.% sodium silicate solution (N Sodium Silicate Solution, 3.22 SiO₂:Na₂O, 37.5% solids, PQ Corporation, Valley Forge, PA) (27.3 vol.%, based on the total volume of the solids), 8.6 wt.% water, and 45.7 wt.% calcium carbonate (72.7 vol.%, based on the total volume of the solids) (CC90, Superior Minerals Company, Savage, MN). A series of 61 cm × 122 cm (2' × 4') ceiling tiles were coated on the back side of the tile with a roll coater, as described in the table, below. The samples were run through a high velocity air impingement convection oven with air temperature of 316 °C 600°F ) achieving a backside temperature of about 204°C (400 °F). Some samples were coated with a second layer of silicate coating with a roll coater, and run through the same oven, achieving a backside temperature of about 204 °C (400°F). The tiles were then coated with an aqueous solution of an alkaline earth metal salt as described in the table, below, with a roll coater or spray coater, and run through a gas fired open flame finishing oven with air temperature around 204°C (400°F) achieving a backside temperature of about 191 °C (375°F). All recorded weights were provided on a dry basis. The tiles were finished with standard punches/fissures and top finish coats. The punching or drilling of holes or fissures into the interior of the ceiling tiles provides for the absorption and attenuation of sound waves. The samples were tested for resistance to moisture induced sag as described above. Sample tiles with melamine formaldehyde based coating and ceiling tiles with no coatings applied were tested as controls.

| Sample Description | Dry Silicate coating weight | Number of silicate coating layers | Alkaline earth metal salt coat weight (mmol/ft²) | Total movement (sag) (cm (inches)) |
|---|---|---|---|---|
| Silicate #6 | 102 g/m² (0.021 lb/ft² (about 9.5 g/ft²)) | 1 | Roll coated, 97 mmol/m² (9 mmol/ft²) | 1.796 (0.707) |
| Silicate #7 | 137 g/m² (0.028 lb/ft² (about 12.7 g/ft²)) | 1 | Spray coated, 97 mmol/m² (9 mmol/ft²) | 1.664 (0.655) |
| Silicate #8 | 93 g/m² (0.019 lb/ft² (about 8.6 g/ft²)) (first layer) 73 g/m² (0.015 lb/ft² (about | 2 | Spray coated, 97 mmol/m² (9 mmol/ft²) | 1.234 (0.486) |
| | 6.8 g/ft²)) (second layer) | | | |
| Silicate #9] | 137 g/m² (0.028 lb/ft² (about 12.7 g/ft²)) | 1 | Roll coated, 97 mmol/m² (9 mmol/ft²) | 1.506 (0.593) |
| Finished melamine formaldehyde board | -- | 0 | -- | 1.494 (0.588) |
| Uncoated tiles | -- | 0 | -- | 2.827 (1.113) |

All coated tiles had reduced sag compared to the uncoated tile. As shown by comparing tiles having coating compositions of the disclosure, Silicate #6 and Silicate #8, resistance to sag increased (total movement decreased) as the total amount of silicate applied increases. Further, as shown by comparing tiles having coating compositions of the disclosure, Silicate #7 and Silicate #9, resistance to sag increased (total movement decreased) as the coat weight of the alkaline earth metal salt solution increases. Without intending to be bound by theory, it is believed that when the coat weight of the alkaline earth metal salt solution is increased, there is more of the multivalent alkaline earth metal present to displace more monovalent cations (e.g., sodium) in the interstitial spaces of the inorganic silicate network, accelerating curing and forming an insoluble silicate coating. Thus, Example 2 demonstrates curable coating compositions and coated ceiling tiles of the disclosure. Thus, Example 2 demonstrates improved sag resistance with coatings of the disclosure when the total amount of silicate applied is increased and as the coat weight of the alkaline earth metal salt is applied in an amount sufficient to form an insoluble coating. Example 2 further demonstrates that ceiling tiles coated with curable coating compositions of the disclosure perform at least comparable to, if not better than, the industry standard melamine formaldehyde coated ceiling tiles.

## Claims

1. A coated fibrous panel comprising:
a fibrous panel (10) comprising a panel core (20) comprising mineral wool fiber and a starch, wherein the fibrous panel (10) is a ceiling tile or an acoustical panel, the fibrous panel (10) having a backing side (30) and an opposing facing side (40) , the fibrous panel having a cured coating layer (50) disposed on the backing side (30) of the panel, the cured coating layer (50) comprising:
10-50 vol.% inorganic binder, based on the total volume of the dry coating, and
50-90 vol.% inorganic filler, based on the total volume of the dry coating;
wherein the inorganic binder comprises an alkali metal silicate or an alkaline earth metal silicate, the inorganic binder and the inorganic filler are not the same, and the coating is substantially free of an organic polymeric binder.

2. The fibrous panel claim 1, wherein the metal silicate comprises a metal silicate selected from the group consisting of sodium silicate, potassium silicate, lithium silicate, magnesium silicate, calcium silicate, beryllium silicate, and combinations thereof.

3. The fibrous panel of claim 1 or claim 2, wherein the inorganic filler comprises a filler selected from the group consisting of clay, mica, sand, barium sulfate, silica, talc, gypsum, calcium carbonate, wollastonite, zinc oxide, zinc sulfate, hollow beads, bentonite salts, and combinations thereof.

4. The fibrous panel of claim 1, wherein the inorganic binder comprises sodium silicate and the inorganic filler comprises kaolin clay and/or calcium carbonate.

5. The fibrous panel of claim 1, wherein the cured coating layer (50) is substantially free of formaldehyde.

6. A method of coating a fibrous panel (10) to form a coated fibrous panel according to claim 1, comprising:
providing a fibrous panel (10) comprising a panel core (20) comprising a mineral wool fiber and a starch, wherein the fibrous panel (10) is a ceiling tile or an acoustical panel, the fibrous panel (10) having a backing side (30) and an opposing facing side (40);
depositing a layer on the backing side (30) of the fibrous panel (10), the layer comprising an inorganic binder and an inorganic filler, wherein the inorganic binder is present in an amount between 10-50 vol.%, based on the total volume of solids in the dry layer, and the inorganic filler is present in an amount between 50-90 vol.%, based on the total volume of solids in the dry layer, wherein the inorganic binder comprises an alkali metal silicate solution or an alkaline earth metal silicate solution, the inorganic binder and the inorganic filler are not the same and the inorganic binder and inorganic filler are substantially free of an organic polymeric binder; and
heating the layer to a surface temperature of at least 177°C (350°F ) to effect drying and curing, thereby forming a solid metal silicate coating (50) on the backing side (30) of the fibrous panel (10).

7. The method of claim 6, wherein
(a) the inorganic binder and inorganic filler are pre-mixed to form a curable coating composition; or
(b) the inorganic filler is deposited as a first layer and the inorganic binder is deposited as a subsequent layer in contact with the first layer.

8. The method of any one of claim 6 or claim 7, further comprising chemical curing.

9. The method of claim 8, wherein chemical curing comprises coating the metal silicate coating layer (50) with a solution of a multivalent metal or an acid, and drying the coating.

10. The method of any one of claims 6 to 9, wherein the metal silicate coating has a coat weight in the range of about 48.8 g/m² (0.01 lb/ft²), dry basis, to about 342 g/m² (0.07 lb/ft²), dry basis.

11. The method of claim 9, wherein the chemical curing comprises applying the multivalent metal solution at a coat weight, dry or wet, in the range of 53.8 mmol/m² (5 mmol/ft²) to about 323 mmol/m² (30 mmol/ft²).

12. The method of claim 6, wherein the inorganic binder comprises sodium silicate and the inorganic filler comprises kaolin clay and/or calcium carbonate.

13. The method of claim 6, wherein the metal silicate coating (50) is substantially free of formaldehyde.

## Patentansprüche

1. Beschichtete Faserplatte, umfassend:
eine Faserplatte (10), umfassend einen Plattenkern (20), der Mineralwollfaser und eine Stärke umfasst, wobei die Faserplatte (10) eine Deckenfliese oder eine akustische Platte ist, wobei die Faserplatte (10) eine Trägerseite (30) und eine gegenüberliegende zugewandte Seite (40) aufweist, wobei die Faserplatte eine gehärtete Beschichtungsschicht (50) aufweist, die auf der Trägerseite (30) der Platte angeordnet ist, wobei die gehärtete Beschichtungsschicht (50) umfasst:
10-50 Vol.-% anorganisches Bindemittel, bezogen auf das Gesamtvolumen der Trockenbeschichtung, und
50-90 Vol.-% anorganischen Füllstoff, bezogen auf das Gesamtvolumen der Trockenbeschichtung;
wobei das anorganische Bindemittel ein Alkalimetallsilicat oder ein Erdalkalimetallsilicat umfasst, das anorganische Bindemittel und der anorganische Füllstoff nicht gleich sind und die Beschichtung im Wesentlichen frei von einem organischen polymeren Bindemittel ist.

2. Faserplatte nach Anspruch 1, wobei das Metallsilicat ein Metallsilicat umfasst, das ausgewählt ist aus der Gruppe bestehend aus Natriumsilicat, Kaliumsilicat, Lithiumsilicat, Magnesiumsilicat, Calciumsilicat, Berylliumsilicat und Kombinationen davon.

3. Faserplatte nach Anspruch 1 oder Anspruch 2, wobei der anorganische Füllstoff einen Füllstoff umfasst, der ausgewählt ist aus der Gruppe bestehend aus Ton, Glimmer, Sand, Bariumsulfat, Siliziumdioxid, Talk, Gips, Calciumcarbonat, Wollastonit, Zinkoxid, Zinksulfat, Hohlkugeln, Bentonitsalzen und Kombinationen davon.

4. Faserplatte nach Anspruch 1, wobei das anorganische Bindemittel Natriumsilicat umfasst und der anorganische Füllstoff Kaolinton und/oder Calciumcarbonat umfasst.

5. Faserplatte nach Anspruch 1, wobei die gehärtete Beschichtungsschicht (50) im Wesentlichen frei von Formaldehyd ist.

6. Verfahren zum Beschichten einer Faserplatte (10), um eine beschichtete Faserplatte nach Anspruch 1 zu bilden, umfassend:
Bereitstellen einer Faserplatte (10), umfassend einen Plattenkern (20), der eine Mineralwollfaser und eine Stärke umfasst, wobei die Faserplatte (10) eine Deckenfliese oder eine akustische Platte ist, wobei die Faserplatte (10) eine Trägerseite (30) und eine gegenüberliegende zugewandte Seite (40) aufweist;
Abscheiden einer Schicht auf der Trägerseite (30) der Faserplatte (10), wobei die Schicht ein anorganisches Bindemittel und einen anorganischen Füllstoff umfasst, wobei das anorganische Bindemittel in einer Menge zwischen 10-50 Vol.-%, bezogen auf das Gesamtvolumen der Feststoffe in der Trockenschicht, vorhanden ist und der anorganische Füllstoff in einer Menge zwischen 50-90 Vol.-%, bezogen auf das Gesamtvolumen der Feststoffe in der Trockenschicht, vorhanden ist, wobei das anorganische Bindemittel eine Alkalimetallsilicatlösung oder eine Erdalkalimetallsilicatlösung umfasst, wobei das anorganische Bindemittel und der anorganische Füllstoff nicht gleich sind und das anorganische Bindemittel und der anorganische Füllstoff im Wesentlichen frei von einem organischen polymeren Bindemittel sind; und
Erwärmen der Schicht auf eine Oberflächentemperatur von mindestens 177 °C (350 °F), um Trocknen und Härten zu bewirken, wodurch eine feste Metallsilicatbeschichtung (50) auf der Trägerseite (30) der Faserplatte (10) gebildet wird.

7. Verfahren nach Anspruch 6, wobei
(a) das anorganische Bindemittel und der anorganische Füllstoff vorgemischt werden, um eine härtbare Beschichtungszusammensetzung zu bilden; oder
(b) der anorganische Füllstoff als eine erste Schicht abgeschieden wird und das anorganische Bindemittel als eine nachfolgende Schicht in Kontakt mit der ersten Schicht abgeschieden wird.

8. Verfahren nach einem der Ansprüche 6 oder 7, ferner umfassend eine chemische Härtung.

9. Verfahren nach Anspruch 8, wobei das chemische Härten das Beschichten der Metallsilicatbeschichtungsschicht (50) mit einer Lösung eines mehrwertigen Metalls oder einer Säure und das Trocknen der Beschichtung umfasst.

10. Verfahren nach einem der Ansprüche 6 bis 9, wobei die Metallsilicatbeschichtung ein Beschichtungsgewicht im Bereich von etwa 48,8 g/m² (0,01 lb/ft²), auf Trockenbasis, bis etwa 342 g/m² (0,07 lb/ft²), auf Trockenbasis, aufweist.

11. Verfahren nach Anspruch 9, wobei das chemische Härten das Aufbringen der mehrwertigen Metalllösung bei einem Beschichtungsgewicht, trocken oder nass, im Bereich von 53,8 mmol/m² (5 mmol/ft²) bis etwa 323 mmol/m² (30 mmol/ft²) umfasst.

12. Verfahren nach Anspruch 6, wobei das anorganische Bindemittel Natriumsilicat umfasst und der anorganische Füllstoff Kaolinton und/oder Calciumcarbonat umfasst.

13. Verfahren nach Anspruch 6, wobei die Metallsilicatbeschichtung (50) im Wesentlichen frei von Formaldehyd ist.

## Revendications

1. Panneau fibreux revêtu comprenant :
un panneau fibreux (10) comprenant une âme de panneau (20) comprenant de la fibre de laine minérale et un amidon, dans lequel le panneau fibreux (10) est un carreau de plafond ou un panneau acoustique, le panneau fibreux (10) ayant un côté arrière (30) et un côté avant opposé (40), le panneau fibreux ayant une couche de revêtement durcie (50) disposée sur le côté arrière (30) du panneau, la couche de revêtement durcie (50) comprenant :
10 à 50 % en volume de liant inorganique, rapporté au volume total du revêtement sec, et
50 à 90 % en volume de charge inorganique, rapporté au volume total du revêtement sec ;
dans lequel le liant inorganique comprend un silicate de métal alcalin ou un silicate de métal alcalino-terreux, le liant inorganique et la charge inorganique ne sont pas les mêmes, et le revêtement est sensiblement exempt de liant polymère organique.

2. Panneau fibreux selon la revendication 1, dans lequel le silicate de métal comprend un silicate de métal choisi dans le groupe constitué par le silicate de sodium, le silicate de potassium, le silicate de lithium, le silicate de magnésium, le silicate de calcium, le silicate de béryllium, et des combinaisons de ceux-ci.

3. Panneau fibreux selon la revendication 1 ou la revendication 2, dans lequel la charge inorganique comprend une charge choisie dans le groupe constitué par l'argile, le mica, le sable, le sulfate de baryum, la silice, le talc, le gypse, le carbonate de calcium, la wollastonite, l'oxyde de zinc, le sulfate de zinc, les billes creuses, les sels de bentonite, et des combinaisons de ceux-ci.

4. Panneau fibreux selon la revendication 1, dans lequel le liant inorganique comprend du silicate de sodium et la charge inorganique comprend de l'argile de kaolin et/ou du carbonate de calcium.

5. Panneau fibreux selon la revendication 1, dans lequel la couche de revêtement durcie (50) est sensiblement dépourvue de formaldéhyde.

6. Procédé de revêtement d'un panneau fibreux (10) pour former un panneau fibreux revêtu selon la revendication 1, comprenant :
la fourniture d'un panneau fibreux (10) comprenant une âme de panneau (20) comprenant une fibre de laine minérale et un amidon, dans lequel le panneau fibreux (10) est un carreau de plafond ou un panneau acoustique, le panneau fibreux (10) ayant un côté arrière (30) et un côté avant opposé (40) ;
le dépôt d'une couche sur le côté arrière (30) du panneau fibreux (10), la couche comprenant un liant inorganique et une charge inorganique, dans lequel le liant inorganique est présent en une quantité comprise entre 10 et 50 % en volume, rapporté au volume total de matières solides dans la couche sèche, et la charge inorganique est présente en une quantité comprise entre 50 et 90 % en volume, rapporté au volume total de matières solides dans la couche sèche, dans lequel le liant inorganique comprend une solution de silicate de métal alcalin ou une solution de silicate de métal alcalino-terreux, le liant inorganique et la charge inorganique ne sont pas les mêmes et le liant inorganique et la charge inorganique sont sensiblement exempts de liant polymère organique ; et
le chauffage de la couche à une température de surface d'au moins 177 °C (350 °F) pour effectuer un séchage et un durcissement, formant ainsi un revêtement de silicate de métal solide (50) sur le côté arrière (30) du panneau fibreux (10).

7. Procédé selon la revendication 6, dans lequel
(a) le liant inorganique et la charge inorganique sont mélangés au préalable pour former une composition de revêtement durcissable ; ou
(b) la charge inorganique est déposée en tant que première couche et le liant inorganique est déposé en tant que couche suivante en contact avec la première couche.

8. Procédé selon l'une quelconque de la revendication 6 ou de la revendication 7, comprenant en outre un durcissement chimique.

9. Procédé selon la revendication 8, dans lequel le durcissement chimique comprend le revêtement de la couche de revêtement de silicate de métal (50) avec une solution d'un métal multivalent ou d'un acide, et le séchage du revêtement.

10. Procédé selon l'une quelconque des revendications 6 à 9, dans lequel le revêtement de silicate de métal a un poids de revêtement compris dans la plage d'environ 48,8 g/m² (0,01 livre/pied²), en base sèche, à environ 342 g/m² (0,07 livre/pied²), en base sèche.

11. Procédé selon la revendication 9, dans lequel le durcissement chimique comprend l'application de la solution de métal multivalent à un poids de revêtement, sec ou humide, compris dans la plage de 53,8 mmol/m² (5 mmol/pied²) à environ 323 mmol/m² (30 mmol/pied²).

12. Procédé selon la revendication 6, dans lequel le liant inorganique comprend du silicate de sodium et la charge inorganique comprend de l'argile de kaolin et/ou du carbonate de calcium.

13. Procédé selon la revendication 6, dans lequel le revêtement de silicate de métal (50) est sensiblement exempt de formaldéhyde.
